# EUROPÄISCHE PATENTSCHRIFT

(11) **EP 0 479 762 B1**
(45) Veröffentlichungstag und Bekanntmachung des Hinweises auf die Patenterteilung: **26.10.1994**
(21) Anmeldenummer: 91890217.2
(22) Anmeldetag: 19.09.1991
(51) Int. Cl.: B60C 11/00, B60C 11/11

(54) **Fahrzeugluftreifen**
Pneumatic tyres for vehicles
Bandage pneumatique pour véhicules

(30) Priorität: 04.10.1990 AT 2003/90
(43) Veröffentlichungstag der Anmeldung: 08.04.1992
(73) Patentinhaber: Semperit Reifen Aktiengesellschaft, A-2514 Traiskirchen (AT)
(72) Erfinder: Stumpf, Horst, Dipl.-Ing., A-2551 Enzesfeld (AT)
(74) Vertreter: Vinazzer, Edith

(56) Entgegenhaltungen:
- EP-A- 0 296 605
- DE-U- 8 502 311
- DE-U- 8 810 493
- DE-U- 9 005 029
- PATENT ABSTRACTS OF JAPAN vol. 9, no. 94 (M-374)(1817) 24. April 1985 & JP-A-59 220 404

## Beschreibung

Die Erfindung betrifft einen Fahrzeugluftreifen in Radialbauart, mit einem drehrichtungsgebundenen Laufflächenprofil, welches durch Quernuten und durch insbesondere gerade verlaufende Umfangsnuten voneinander getrennte Blockelemente aufweist, wobei die Quernuten, über die Laufflachenbreite betrachtet, zumindest im wesentlichen einen gepfeilten Gesamtverlauf aufweisen und wobei die Pfeilspitzen einer einzigen in Umfangsrichtung verlaufenden Blockreihe zugeordnet sind.

Drehrichtungsgebundene Laufflächenprofile haben sich in jüngster Vergangenheit insbesondere für Reifen, die für höhere Laufgeschwindigkeiten vorgesehen sind, durchgesetzt, da sie herkömmlichen Profilgestaltungen vor allem hinsichtlich Naßgriff, Aquaplaningverhalten und Fahrverhalten überlegen gestaltet werden können. Ein derartiges Laufflächenprofil ist beispielsweise aus der DE-A 3 720 854 bekannt. Durch das in dieser Druckschrift in unterschiedlichen Ausführungsvarianten dargestellte und beschriebene Laufflächenprofil, welches ein drehrichtungsgebundenes gepfeiltes Profilgrundmuster mit gerade umlaufenden Umfangsrillen und schräg orientierten Querrillen aufweist, soll insbesondere die Wasserverdrängung und Wasserableitung verbessert werden. Durch die Pfeilung der Quernuten sind solche Laufflächenprofile relativ ebenmäßig bzw. gleichmäßig gestaltet und somit hinsichtlich des Abrollgeräusches verbesserungswürdig.

Das selbst auch dann, wenn bei einem derartigen Profil, wie es heute allgemein üblich ist, eine der Methoden der Pitchlängenvariation, wonach die über den Reifenumfang aufeinanderfolgenden, gleichartigen Profilabschnitte mit unterschiedlichen Umfangslängen versehen werden und nach einer rechnerisch optimierten Abfolge in Umfangsrichtung aufeinanderfolgen, angewendet wird.

Es ist daher Aufgabe der vorliegenden Erfindung, ein Laufflächenprofil der eingangs genannten Art durch einfachen Maßnahmen hinsichtlich des erzeugten Abrollgeräusches zu verbessern.

Gelöst wird die gestellte Aufgabe erfindungsgemäß dadurch, daß die Pfeilspitzen der Quernuten bzw. Quernutkanten innerhalb ihrer Blockreihe zumindest zwei Bezugslinien, die parallel zum Reifenäquator (A-A) verlaufen, in Reifenumfangsrichtung in abwechselnder Art und Weise zugeordnet sind.

Die gemäß der Erfindung erzielbare günstige Beeinflussung des Reifengeräusches ist vor allem darauf zurückzuführen, daß durch eine Variation der Zuordnung der Pfeilspitzen der Quernuten bzw. Quernutkanten sich wiederholende Profilstrukturen vermieden werden. Die erfindungsgemäße Maßnahme bewirkt insbesondere zusätzliche positive Effekte bei der Verteilung der auftretenden Frequenzen auf ein breiteres Frequenzband während des Abrollens des Reifens.

Besonders vorteilhafte Ausgestaltungen und Ausführungsvarianten der Erfindung sind in den Unteransprüchen enthalten.

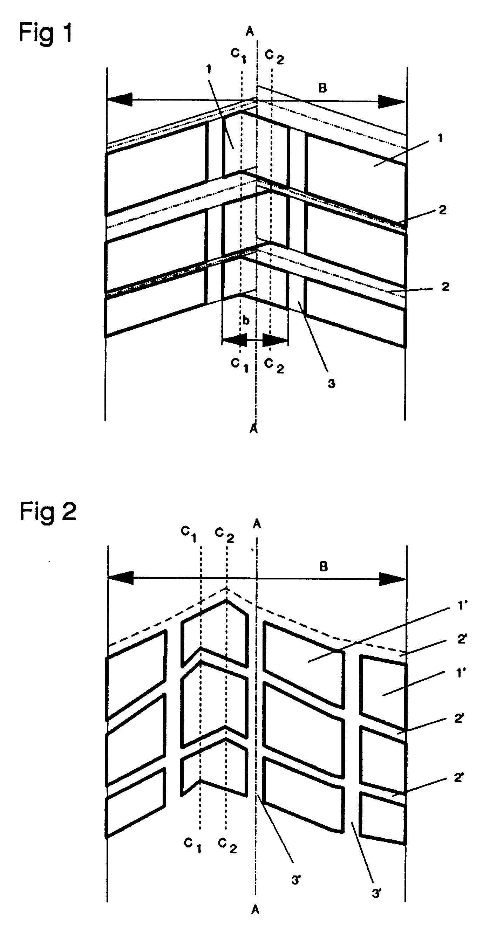

Weitere Merkmale, Vorteile und Einzelheiten der Erfindung werden nun anhand der Zeichnung, die drei Ausführungsbeispiele darstellt, naher beschrieben. Dabei ist in den Figuren 1 bis 3 jeweils eine Teilabwicklung auf ein gemäß der Erfindung gestaltetes Laufflächenprofil schematisch dargestellt.

Wie Fig. 1 zeigt, ist das Laufflächenprofil durch Quernuten 2 und gerade verlaufende Umfangsnuten 3 in Blockelemente 1 gegliedert. Eine drehrichtungsabhängige Profilgestaltung ergibt sich dadurch, daß die Quernuten 2, über die Laufflächenbreite B, die der Breite des Reifens in der Bodenaufstandsfläche unter Normaldruck und Normallast entspricht, betrachtet, einen gepfeilten Gesamtverlauf aufweisen. Der Winkel, den die Quernuten 2 bzw. die Quernutkanten jeweils beidseitig der Pfeilspitzen mit der Äquatorlinie A-A einschließen, ist bei dieser Ausführungsvariante konstant. Die Pfeilspitzen treten beim Abrollen des Reifens zuerst in die Kontaktfläche mit dem Untergrund. Entlang der Äquatorlinie A-A ist eine sich aus Einzelblöcken 1 zusammensetzende Blockreihe vorgesehen, wo die Pfeilspitzen der Quernuten verlaufen und somit die Ausgestaltung der Blockelemente 1 mitbestimmen. Dabei ist beidseitig neben der Äquatorlinie A-A jeweils eine Bezuglinie C₁-C₁ bzw. C₂-C₂ vorgesehen, wobei diese Bezugslinien parallel zur Äquatorlinie A-A verlaufen und von dieser gleich beabstandet sind. Die Quernutkanten im Bereich der Pfeilspitzen sind nun so ausgeführt, daß bei jedem Blockelement 1 eine über den Reifenumtang abwechselnde Zuordnung zu den Bezugslinien C₁-C₁ und C₂-C₂ erfolgt. Daher sind jeweils die der Querrichtung zuzuordnenden Blockkanten eines einzelnen Blockelementes 1 bezüglich der Pfeilspitzenzuordnung gleichgestaltet. Die Bezugslinien C₁-C₁ und C₂-C₂ sind hiebei von einander zwischen 10% und 80% der Blockreihenbreite b beabstandet. Diese Zuordnung bedingt eine beidseitig der Pfeilspitzen unterschiedliche Quernutbreite, wobei auch, über den Umfang betrachtet, schmale und breite Quernutabschnitte aufeinanderfolgen.

Fig. 2 zeigt eine Ausführungsvariante mit einer asymmetrischen Gestaltung des Laufflächenprofiles, welches wiederum durch Quernuten 2' und Umfangsnuten 3' in Blockelemente 1' gegliedert ist. Die Pfeilspitzen der Quernuten 2' sind bei dieser Variante zwei Bezugslinien C₁-C₁ und C₂-C₂ zugeordnet, die in der gleichen Laufflächenhälfte verlaufen, und zwar in jener, die beim am Fahrzeug montierten Reifen der Radaußenseite zuzuordnen ist. Dabei nimmt die Pfeilung zu den Laufflächenprofilrändern zu ab. Entlang dieser beiden Bezugslinien C₁-C₁ und C₂-C₂ verläuft wiederum eine einzige in Umfangsrichtung angeordnete Blockreihe. Bei diesem Ausführungsbeispiel erfolgt ein Wechsel in der Zuordnung der Pfeilspitzen der Quernuten 2' zu den Bezugslinien derart, daß abwechselnd eine Quernut mit ihren Blockkantenbegrenzungen der einen Bezugslinie und die in Umfangsrichtung darauf folgende jeweils der zweiten Bezugslinie C₂-C₂ zugeordnet ist. Die axial weiter außen liegende Bezugslinie C₁-C₁ verlauft hierbei in einem Normalabstand vom Äquator, der 25% der Aufstandsbreite B nicht übersteigen sollte. Der gegenseitige Abstand der beiden Bezugslinien C₁-C₁ und C₂-C₂ wird wie beim ersten Ausführungsbeispiel beschrieben getroffen.

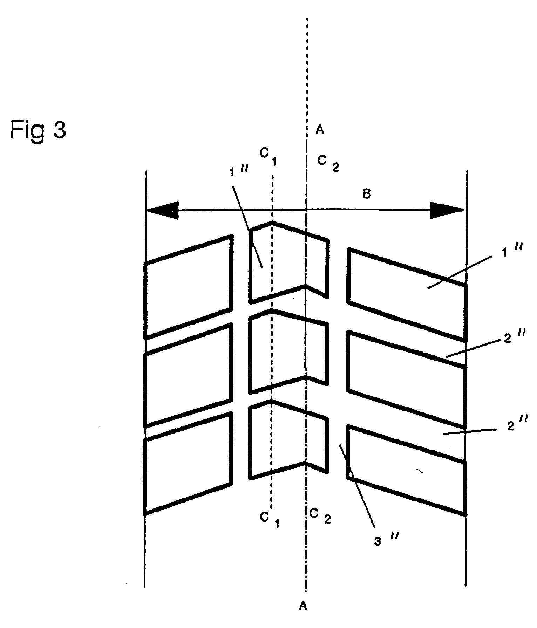

Fig. 3 zeigt eine dritte Ausführungsvariante, bei der wiederum durch Umfangsnuten 3'' und gepfeilt gestaltete Quernuten 2'' in Blockreihen angeordnete Blockelemente 1'' gebildet sind, wobei eine dieser Blockreihen wieder zwei den Pfeilspitzen der Quernutkanten zuzuordnende Bezugslinien C₁-C₁ und enthält. Die Bezugslinie C₂-C₂ fällt bei diesem Ausführungsbeispiel mit der Äquatorlinie (Mittellinie) des Reifens zusammen. Dabei ist, über den Reifenumfang betrachtet, eine Quernutkante der Bezugslinie C₁-C₁, die in Umfangsrichtung aufeinanderfolgende Quernutkante der Bezugslinie C₂-C₂, jeweils abwechselnd aufeinanderfolgend, zugeordnet. Auch hier handelt es sich um eine asymmetrische Ausgestaltung des Laufflächenprofiles. Durch diese Zuordnung sind die zur Außenschulter des Reifens (bei am Fahrzeug montiertem Reifen betrachtet) verlaufenden Quernutabschnitte günstigerweise schmäler als die zur Innenschulter verlaufenden Quernutabschnitte. Der gegenseitige Abstand der beiden Bezugslinien C₁-C₁ und C₂-C₂ entspricht jenem, wie er anhand des Ausführungsbeispieles gemäß Fig. 1 beschrieben wurde.

Selbstverständlich kann eine asymmetrische Ausgestaltung auch getroffen sein, wenn beide Bezugslinien C₁-C₁ und C₂-C₂ in unterschiedlichen Laufflächenhälften verlaufen.

Abweichend von den dargestellten Ausführungsvarianten können die beiden Bezugslinien C₁-C₁ und C₂-C₂ Grenzbezugslinien für eine Pfeilspitzenzuordnung der Quernuten bzw. Quernutkanten sein, die im Bereich zwischen diesen beiden Bezugslinien variabel erfolgt. Eine derartige Variation kann statistisch oder nach einer vorgegebenen Abfolge erfolgen.

## Patentansprüche

1. Fahrzeugluftreifen in Radialbauart mit einem drehrichtungsgebundenen Laufflächenprofil, welches durch Quernuten (2, 2', 2'') und durch, insbesondere gerade verlaufende, Umfangsnuten (3, 3', 3'') voneinander getrennte Blockelemente (1, 1', 1'') aufweist, wobei die Quernuten (2, 2', 2''), über die Laufflächenbreite betrachtet, zumindest im wesentlichen einen gepfeilten Gesamtverlauf aufweisen und wobei die Pfeilspitzen einer einzigen in Umfangsrichtung verlaufenden Blockreihe zugeordnet sind, dadurch gekennzeichnet, daß die Pfeilspitzen der Quernuten (2, 2, 2'') bzw. Quernutkanten innerhalb ihrer Blockreihe zumindest zwei Bezugslinien (C₁-C₁, C₂-C₂), die parallel zum Reitenäquator (A-A) verlaufen, in Reifenumfangsrichtung in abwechselnder Art und Weise zugeordnet sind.

2. Reifen nach Anspruch 1, dadurch gekennzeichnet, daß die beiden voneinander am weitesten beabstandeten Bezugslinien (C₁-C₁, C₂-C₂) um zumindest 10%, höchstens 80% der Breite jener Blockreihen, wo sie verlaufen, voneinander entfernt sind.

3. Reifen nach Anspruch 1 oder Anspruch 2, dadurch gekennzeichnet, daß die beiden voneinander am weitesten beabstandeten Bezugslinien (C₁-C₁, C₂-C₂) symmetrisch zur Äquatorlinie (A-A) des Reifens verlaufen.

4. Reifen nach Anspruch 1 oder Anspruch 2, dadurch gekennzeichnet, daß die beiden voneinander am weitesten beabstandeten Bezugslinien (C₁-C₁, C₂-C₂) in jener Laufflächenhälfte verlaufen, die, bei am Fahrzeug montierten Reifen, der Radaußenseite zugewendet ist.

5. Reifen nach Anspruch 4, dadurch gekennzeichnet, daß der Abstand dieser Bezugslinien (C₁-C₁, C₂-C₂) von der Äquatorlinie (A-A) des Reifens maximal 25% der Laufflächenbreite (B) (Breite des Reifens in der Bodenaufstandsfläche) beträgt.

6. Reifen nach einem der Ansprüche 1 bis 5, dadurch gekennzeichnet, daß die Pfeilspitzen der Quernuten (2, 2', 2'') bzw. der Quernutkanten zwei Bezugslinien (C₁-C₁, C₂-C₂) zugeordnet sind.

7. Reifen nach Anspruch 6, dadurch gekennzeichnet, daß die Pfeilspitzen der Quernutkanten über den Reifenumfang pro Blockelement (1) abwechselnd der einen und der anderen Bezugslinie (C₁-C₁, C₂-C₂) zugeordnet sind (Fig.1).

8. Reifen nach Anspruch 6, dadurch gekennzeichnet, daß die Pfeilspitzen der Quernutkanten über den Reifenumfang pro Quernut (2') abwechselnd der einen und der anderen Bezugslinie (C₁-C₁, C₂-C₂) zugeordnet sind (Fig.2).

9. Reifen nach Anspruch 6, dadurch gekennzeichnet, daß die Pfeilspitzen der Quernutkanten abwechselnd der einen und der anderen Bezugslinie (C₁-C₁, C₂-C₂) zugeordnet sind (Fig. 3).

10. Reifen nach einem der Ansprüche 1 bis 5 dadurch gekennzeichnet, daß die beiden voneinander am größten beabstandeten Bezugslinien Grenzbezugslinien sind und die Pfeilspitzen der Quernuten bzw. Quernutkanten im Bereich zwischen diesen Bezugslinien, insbesondere an beliebiger Stelle, verlaufen.

## Claims

1. Pneumatic vehicle tyre of a radial type of construction, having a tread surface profile which is adapted to the direction of rotation and has block elements (1, 1', 1''), which are separated from one another by transverse grooves (2, 2', 2'') and by circumferential grooves (3, 3', 3''), which extend more especially in a straight line, the transverse grooves (2, 2', 2'') having a general configuration which is at least substantially arrow-shaped when viewed over the tread surface width, and the arrow tips being associated with one single row of blocks, which extends in the circumferential direction, characterised in that the arrow tips of the transverse grooves (2, 2', 2'') or respectively transverse groove edges internally of their row of blocks are associated with at least two reference lines (C₁-C₁, C₂-C₂) in an alternating manner in the circumferential direction of the tyre, said reference lines extending parallel to the tyre centre (A-A).

2. Tyre according to claim 1, characterised in that the two reference lines (C₁-C₁, C₂-C₂), which have the widest spacing from each other, are spaced from each other by a distance corresponding to at least 10%, at most 80%, of the width of those rows of blocks to which they extend.

3. Tyre according to claim 1 or claim 2, characterised in that the two reference lines (C₁-C₁, C₂-C₂), which have the widest spacing from each other, extend symmetrically relative to the centre line (A-A) of the tyre.

4. Tyre according to claim 1 or claim 2, characterised in that the two reference lines (C₁-C₁, C₂-C₂), which have the widest spacing from each other, extend in that tread surface half which faces the outside of the wheel when the tyre is mounted on the vehicle.

5. Tyre according to claim 4, characterised in that the maximum spacing between these reference lines (C₁-C₁, C₂-C₂) and the centre line (A-A) of the tyre is 25% of the tread surface width (B) (width of the tyre in the ground support area).

6. Tyre according to one of claims 1 to 5, characterised in that the arrow tips of the transverse grooves (2, 2', 2'') or respectively of the transverse groove edges are associated with two reference lines (C₁-C₁, C₂-C₂).

7. Tyre according to claim 6, characterised in that the arrow tips of the transverse groove edges over the tyre circumference per block element (1) are alternately associated with one or other reference line (C₁-C₁, C₂-C₂) (Fig. 1).

8. Tyre according to claim 6, characterised in that the arrow tips of the transverse groove edges over the tyre circumference per transverse groove (2') are alternately associated with one or other reference line (C₁-C₁, C₂-C₂) (Fig. 2).

9. Tyre according to claim 6, characterised in that the arrow tips of the transverse groove edges are alternately associated with one or other reference line (C₁-C₁, C₂-C₂) (Fig. 3).

10. Tyre according to one of claims 1 to 5, characterised in that the two reference lines, which have the greatest spacing from each other, are boundary reference lines, and the arrow tips of the transverse grooves or respectively transverse groove edges extend in the region between these reference lines, more especially at any desired location.

## Revendications

1. Pneumatique pour véhicules de conception radiale avec un profil de chape associé au sens de rotation, qui présente des éléments de bloc (1, 1', 1'') séparés entre eux en particulier par des gorges périphériques (3, 3', 3'') s'étendant de façon rectiligne, les gorges transversales (2, 2', 2''), considérées sur la largeur de chape, présentant au moins dans l'essentiel un tracé global à chevrons ou à flèches et les pointes de chevrons ou de flèches étant affectées à une seule série de blocs s'étendant dans la direction périphérique, pneumatique pour véhicules caractérisé en ce que les pointes de flèches ou de chevrons des gorges transversales (2, 2', 2'') ou des bords de gorges transversales sont affectées à l'intérieur de leur série de blocs au moins à deux lignes de référence (C₁-C₁, C₂-C₂), qui s'étendent parallèlement à la ligne d'équateur du pneumatique (A-A), de façon alternée dans la direction périphérique du pneumatique.

2. Pneumatique selon la'revendication 1, caractérisé en ce que les deux lignes de référence (C₁-C₁, C₂-C₂ séparées par la plus grande distance entre elles sont au moins éloignées de 10 %, au maximum de 80 % de la largeur des séries de blocs où elles s'étendent.

3. Pneumatique selon la revendication 1 ou la revendication 2, caractérisé en ce que les deux lignes de référence (C₁-C₁, C₂-C₂) présentant le plus grand éloignement entre elles s'étendent symétriquement par rapport à la ligne d'équateur (A-A) du pneumatique.

4. Pneumatique selon la revendication 1 ou la revendication 2, caractérisé en ce que les deux lignes de référence (C₁-C₁, C₂-C₂ présentant la plus grande distance d'éloignement entre elles s'étendent dans la moitié de chape qui, pour un pneumatique monté sur la roue du véhicule, est dirigée vers le côté extérieur de la roue.

5. Pneumatique selon la revendication 4, caractérisé en ce que la distance de ces lignes de référence (C₁-C₁, C₂-C₂) par rapport à la ligne d'équateur (A-A) du pneumatique correspond à un maximum de 25 % de la largeur de la chape (B) (largeur du pneumatique dans la surface de contact au sol).

6. Pneumatique selon l'une des revendications 1 à 5, caractérisé en ce que les pointes de flèches ou de chevrons des gorges transversales (2, 2', 2'') ou des bords de gorges transversales sont affectées à deux lignes de référence (C₁-C₁, C₂-C₂).

7. Pneumatique selon la revendication 6, caractérisé en ce que les pointes de flèches ou des chevrons des bords de gorges transversales sont affectées sur la périphérie du pneumatique par élément de bloc (1) de façon alternée à l'une et à l'autre ligne de référence (C₁-C₁, C₂-C₂) (Fig.1).

8. Pneumatique selon la revendication 6, caractérisé en ce que les pointes de flèches ou de chevrons des bords de gorges transversales sont affectées sur la périphérie du pneumatique par gorge transversale (2'') de façon alternée à l'une ou à l'autre ligne de référence (C₁-C₁, C₂-C₂) (Fig.2).

9. Pneumatique selon la revendication 6, caractérisé en ce que les pointes de flèches ou de chevrons des bords de gorges transversales sont affectées de façon alternée à l'une ou à l'autre ligne de référence (C₁-C₁, C₂-C₂) (Fig.3).

10. Pneumatique selon l'une des revendications 1 à 5, caractérisé en ce que les deux lignes de référence présentant le plus grand éloignement entre elles constituent les lignes de référence limites et les pointes de flèches ou de chevrons des gorges transversales ou des bords de gorges transversales s'étendent dans la zone entre ces lignes de référence, en particulier en un quelconque endroit.
